# EUROPÄISCHE PATENTANMELDUNG

(11) **EP 1 958 520 A2**
(43) Veröffentlichungstag der Anmeldung: **20.08.2008**
(21) Anmeldenummer: 08151035.6
(22) Anmeldetag: 04.02.2008
(51) Int. Cl.: A23L 1/22

(54) **Wirbelschichtgranulate mit hohem Fruchtanteil**

(30) Priorität: 09.02.2007 US 888976 P
(71) Anmelder: Symrise GmbH & Co. KG, 37603 Holzminden (DE)
(72) Erfinder: Fexer, Wolfgang, 37603 Holzminden (DE); Gruber, Eric, 37603 Holzminden (DE)
(74) Vertreter: Eisenführ, Speiser & Partner

(57) **Zusammenfassung**

Die vorliegende Erfindung betrifft mittels Wirbelschichtverfahren herstellbare Aromagranulate, dadurch gekennzeichnet, dass das die Aromagranulate eine im Wesentlichen kugelförmige Geometrie mit festem Kugelkörper aufweisen, umfassend oder bestehend aus folgenden Bestandteilen, jeweils bezogen auf das entstandene Aromagranulat:
aa) 60 bis 90 Gew.-% Fruchttrockensubstanz
und
bb) einer Trägermatrix umfassend oder bestehend aus
i) 10 bis 40 Gew.-% Magnesium-Salz einer oder mehrerer fester verzehrbarer Säuren
oder
ii) einer Mischung aus
a. 5 bis 20 Gew-% Magnesiumhydroxid und
b. 5 bis 20 Gew.-% einer oder mehrer fester verzehrbarer Säuren, Verwendungen der erfindungsgemäßen Aromagranulate sowie ein Wirbelschichtverfahren.

## Beschreibung

Die vorliegende Erfindung betrifft mittels Wirbelschichtverfahren hergestellte Aromagranulate, welche einen Anteil von 60 bis 90 Gew.-% Fruchttrockensubstanz (Fruchttrockenmasse) und eine spezielle Trägermatrix aufweisen, ein Verfahren zur Herstellung dieser Aromagranulate, zum Verzehr geeignete Produkte enthaltend diese Aromagranulate und Verwendungen dieser Aromagranulate sowie ein Wirbelschichtverfahren an sich.

Der immer steigende Bedarf an Produkten im Nahrungsmittel- und Getränkesektor erhöht auch den Bedarf an immer neuen Aromen. Hierbei ist zu beobachten, dass insbesondere der Bedarf an natürlichen Aromastoffen wächst, da sich immer mehr Konsumenten gesundheitsbewusst ernähren möchten und dabei ein großes Augenmerk auf natürliche Produkte legen. Zum anderen bestehen in einigen Ländern, insbesondere der Europäischen Union oder den USA, gesetzliche Regelungen zur Beschriftung von Etiketten bzw. zur Abbildung der eingesetzten Früchte, wonach z. B. nur Produkte, die natürliche Aromen aufweisen, mit Bildern der Ausgangsprodukte, wie zum Beispiel einer Erdbeere, auf Etiketten der Verpackung vermarktet werden dürfen. Im Gegensatz hierzu können auf Etiketten von Produkten mit naturidentischen oder künstlichen Aromen lediglich Zeichnungen auf die Ausgangsfrüchte hinweisen.

Natürliche Aromen werden grundsätzlich in drei Hauptgruppen unterteilt:

"From-The-Named-Fruit" (FTNF) Aromen bestehen aus Extrakten oder Destillaten des jeweils genannten Nahrungsmittels. Schon an dieser Bezeichnung erkennt man den Ursprung dieser Aromen, nämlich, dass sie vollständig aus nur der jeweils genannten Frucht gewonnen werden. Im Allgemeinen bieten FTNF-Aromen authentische und natürliche Duft- und Geschmacksnoten.

"With-Other-Natural-Flavourings" (WONF) stellen FTNF-Aromen dar, die mit anderen natürlichen Aromen gemischt werden.

Natürliche Aromen umfassen Aromen jeglichen Ursprunges, solange der Ursprung natürlich ist. Sie müssen demnach nicht von der genannten Frucht stammen.

Aufgrund des gesundheitsbewussten Verhaltens der Konsumenten im Zusammenspiel mit den jeweiligen Etikettierungsvorschriften besteht deshalb ein Bedarf FTNF-Aromen herzustellen.

Aus US 4,664,920 ist ein Pulver mit hohem Fruchtanteil bekannt, das eine Trägermatrix auf Basis von Magnesiumsalzen und bestimmten Säuren enthält. Dieses Pulver wird mittels Gefriertrocknung, Sprühtrocknung oder Trommeltrocknung hergestellt. In Beispiel 1 wird ein Pulver mittels Sprühtrocknung hergestellt, das aus 85 Gew.-% Saft-Feststoffen und 15 Gew.-% Magnesium-Citrat-Träger besteht. In Beispiel 3 wird ein Pulver mittels Sprühtrocknung hergestellt, dass 70 Gew.-% Tomaten-Feststoffe und 30 Gew.-% Magnesium-Citrat-Träger aufweist.

Nachteilig an diesem Verfahren ist, dass die mittels Sprühtrocknung hergestellten Pulver aufgrund des Herstellungsverfahrens sphärische Partikel darstellen, die einen Hohlkörper aufweisen. Somit weist nicht das gesamte Volumen der Pulver-Partikel Aromen auf.

Ein weiterer Nachteil des in US 4,664,920 beschriebenen Verfahrens besteht darin, dass der jeweilige Sprühansatz, enthaltend das Magnesiumkation, das Säureanion und die Bestandteile, welche fixiert werden sollen, lediglich kurz vor dem Trocknungsprozess zusammengemischt werden dürfen und dann direkt der Sprühtrocknung zugeführt werden müssen (vgl. Spalte 2, Zeilen 43 bis 49 in US 4,664,920).

Zudem führen Sprühtrocknungsverfahren zu mittleren Partikelgrößen der Pulverpartikel von kleiner als 120 µm. Bei Einsatz solcher Pulver zum Beispiel zur Mischung mit Teeblättern kann es deshalb vermehrt zu Entmischungen der Pulver- und der Teebestandteile kommen. Die Herstellung von Pulvern mittels Sprühtrocknung führt außerdem zu einer breiten Partikelgrößenverteilung, so dass die hergestellten Pulver nachgesiebt werden müssen und dadurch neben dem zeitlichen Arbeitsaufwand auch wertvolles Material verloren geht.

Mittels Wirbelschichtverfahren können Granulate hergestellt werden, die eine enge Partikelgrößenverteilung und eine einstellbare Partikelgröße aufweisen, sodass die Größe so eingestellt werden kann, dass eine Entmischung mit dem zu mischenden Produkt vermindert wird.

Allerdings können mit den Wirbelschichtverfahren, wie sie bisher bekannt sind, in der Regel lediglich Beladungen mit Fruchttrockensubstanz (Anteil an Fruchttrockensubstanz am Gesamtgewicht des Granulats) unter 50 Gew.-%, insbesondere zwischen 10 bis 40 Gew.-% erreicht werden. Bei einer Beladung mit Fruchttrockenmasse von mehr als 50 Gew.-% zusammen mit den üblichen Trägermaterialien Gummi Arabicum und/oder Maltodextrin kommt es regelmäßig zum Zusammenbrechen und/oder Verklumpen des Inhaltes des Wirbelschichtbettes. Ein solches Verhalten nimmt mit steigendem Anteil an Fruchttrockensubstanz zu. Als Produkte resultieren unter anderem schwamm- oder korallenartige Gebilde größeren Ausmaßes (bis zu 15 cm Durchmesser in der Pilotanlage).

Folglich besteht weiterhin ein großer Bedarf daran, FTNF-Aromen herzustellen, wobei die Beladung mit Fruchttrockensubstanz bezogen auf das Gesamtvolumen des Granulates im Vergleich zum Stand der Technik erhöht vorliegt, diese Granulate in einer solchen Größe hergestellt werden können, dass Entmischungen je nach der Art der zu mischenden Produkte vermindert werden und bei der Herstellung farbstabile Granulate entstehen, d.h., dass es nicht zu unerwünschten Farbveränderungen der Granulate kommt.

Die Erfindung wird gelöst durch ein Wirbelschichtverfahren zur Herstellung von Aromagranulaten, dadurch gekennzeichnet, dass das Verfahren folgende Schritte umfasst oder daraus besteht:
A) Bereitstellung einer Lösung, Emulsion oder Suspension umfassend oder bestehend aus
   a) gegebenenfalls einem oder mehreren Lösungsmitteln
      und
   b) einer Mischung umfassend oder bestehend aus
      aa) Fruchtsaft und/oder Fruchtkonzentrat
         und
      bb) einer Trägermatrix umfassend oder bestehend aus
         i) Magnesium-Salz einer oder mehrerer fester verzehrbarer Säuren
            oder
         ii) einer Mischung aus
            a. Magnesiumhydroxid und
            b. einer oder mehrer fester verzehrbarer Säuren,
B) Sprühen der Lösung, Emulsion oder Suspension aus A) in einen Wirbelschichtgranulator
   und
C) Abtrennen der entstandenen Aromagranulate, wobei die Aromagranulate eine im Wesentlichen kugelförmige Geometrie mit festem Kugelkörper aufweisen, umfassend oder bestehend aus folgenden Bestandteilen, jeweils bezogen auf das Gesamtgewicht der entstandenen Aromagranulate:
   aa) 60 bis 90 Gew.-% Fruchttrockensubstanz
      und
   bb) einer Trägermatrix umfassend oder bestehend aus
      i) 10 bis 40 Gew.-% Magnesium-Salz einer oder mehrerer fester verzehrbarer Säuren
         oder
      ii) einer Mischung aus
         a. 5 bis 20 Gew-% Magnesiumhydroxid und
         b. 5 bis 20 Gew.-% einer oder mehrer fester verzehrbarer Säuren.

Ein weiterer Gegenstand der vorliegenden Erfindung betrifft Aromagranulate herstellbar nach dem erfindungsgemäßen Verfahren wie oben beschrieben, dadurch gekennzeichnet, dass die Aromagranulate eine im wesentlichen kugelförmige Geometrie mit festem Kugelkörper aufweisen und folgende Bestandteile umfassen oder daraus bestehen, jeweils bezogen auf das Gesamtgewicht der entstandenen Aromagranulate:
aa) 60 bis 90 Gew.-% Fruchttrockensubstanz
   und
bb) einer Trägermatrix umfassend oder bestehend aus
   i) 10 bis 40 Gew.-% Magnesium-Salz einer oder mehrerer fester verzehrbarer Säuren
      oder
   ii) einer Mischung aus
      a. 5 bis 20 Gew-% Magnesiumhydroxid und
      b. 5 bis 20 Gew.-% einer oder mehrer fester verzehrbarer Säuren.

Ein weiterer Gegenstand der vorliegenden Erfindung betrifft zum Verzehr geeignete Produkte enthaltend Aromagranulate herstellbar nach einem erfindungsgemäßen Verfahren, dadurch gekennzeichnet, dass die Aromagranulate folgende Bestandteile umfassen oder daraus bestehen, jeweils bezogen auf Gesamtgewicht der entstandenen Aromagranulate:
aa) 60 bis 90 Gew.-% Fruchttrockensubstanz
   und
bb) einer Trägermatrix umfassend oder bestehend aus
   i) 10 bis 40 Gew.-% Magnesium-Salz einer oder mehrerer fester verzehrbarer Säuren
      oder
   ii) einer Mischung aus
      a. 5 bis 20 Gew.-% Magnesiumhydroxid und
      b. 5 bis 20 Gew.-% einer oder mehrer fester verzehrbarer Säuren.

Ein weiterer Gegenstand der vorliegenden Erfindung betrifft die Verwendung von erfindungsgemäßen Aromagranulaten in Nahrungsmitteln, Genussmitteln und Halbfertigprodukten sowie zur Herstellung von Nahrungsmitteln, Genussmitteln und Halbfertigprodukten.

Bevorzugte Gegenstände der vorliegenden Erfindung sind insbesondere in den abhängigen Ansprüchen beschrieben. Die bevorzugten Ausgestaltungen der vorstehenden erfindungsgemäßen Gegenstände lassen sich untereinander teilweise oder vollständig kombinieren, auch wenn die Beschreibung hierzu keine speziellen Angaben macht.

Erfindungsgemäß umfassen oder bestehen bevorzugte Aromagranulate aus folgenden Bestandteilen, jeweils bezogen auf das Gesamtgewicht der entstandenen Aromagranulate:
aa) 70 bis 90 Gew.-% Fruchttrockensubstanz
   und
bb) einer Trägermatrix umfassend oder bestehend aus
   i) 10 bis 30 Gew.-% Magnesium-Salz einer oder mehrerer fester verzehrbarer Säuren
      oder
   ii) einer Mischung aus
      a. 5 bis 15 Gew.-% Magnesiumhydroxid und
      b. 5 bis 15 Gew.-% einer oder mehrer fester verzehrbarer Säuren.

Die Gewichtsprozentangaben der Bestandteile aa) und bb) beziehen sich jeweils auf das Gesamtgewicht der entstandenen Aromagranulate.

Die erfindungsgemäßen Aromagranulate sowie deren bevorzugte Ausgestaltungen weisen eine im Wesentlichen kugelförmige Geometrie auf, die durch eine hohe Sphärizität gekennzeichnet ist.

Die Sphärizität entspricht nach H. Wadell ("Volume, Shape and Roundness of Rock Particles"; Journal of Geology 40 (1932) 443 - 451 dem Verhältnis von der Oberfläche einer volumengleichen Kugel tatsächlichen Oberfläche. Definitionsgemäß kann die Sphärizität Zahlenwerte im Bereich > 0 bis 1 annehmen. Erfindungsgemäß bevorzugte Aromapartikel weisen eine Sphärizität von größer oder gleich 0,75, besonders bevorzugt von größer oder gleich 0,90, auf.

Erfindungsgemäße Araomagranulate mit im Wesentlichen kugelförmiger Geometrie weisen einen festen Kugelkörper auf. Im Sinne der vorliegenden Erfindung bedeutet fester Kugelkörper, dass das Innere der Granulate aus den Bestandteilen Fruchttrockensubstanz und Trägermatrix besteht und keinen Hohlkörper im Sinne einer Ausgestaltung nach Kern und Schale aufweist.

Demzufolge ist die Beladung mit Fruchttrockensubstanz bezogen auf das Volumen der erfindungsgemäßen Granulate gegenüber Partikeln, die mittels Sprühtrocknung hergestellt wurden, erhöht, da bei Letzteren verfahrensbedingt Hohlkörper entstehen. Zudem können mittels erfindungsgemäßen Wirbelschichtverfahren freifließende, staubarme, körnige Granulate mit einer engen Korngrößenverteilung hergestellt werden, so dass ein Nachsieben der erhaltenden Granulate vermindert wird oder nicht mehr notwendig ist.

Im Gegensatz zu den Granulaten mit hoher Beladung an Fruchttrockensubstanz, die mittels Wirbelschichtverfahren aus dem Stand der Technik hergestellt werden, kommt es bei dem erfindungsgemäßen Verfahren nicht zu einem Verklumpen des Inhalts des Wirbelschichtbettes, so dass keine Granulatgebilde größeren Ausmaßes entstehen.

Der gemäß dem erfindungsgemäßen Wirbelschichtverfahren verwendete Sprühansatz ist im Gegensatz zu dem Sprühansatz, der in US 4,664,920 beschrieben wird, über einen längeren Zeitraum stabil, insbesondere auch farbstabil. So zeigt sich, dass bei der Verwendung des erfindungsgemäßen Wirbelschichtverfahrens in der Pilotanlage der Sprühansatz über den gesamten Zeitraum des Verfahrens, insbesondere über einen Zeitraum von 5 Stunden stabil bleibt. Bei der großtechnischen Produktion der erfindungsgemäßen Aromagranulate gemäß des erfindungsgemäßen Wirbelschichtverfahrens bleibt der Sprühansatz bei Einsatz von ca. einer Tonne der Mischung über einen Zeitraum von ca. 10 Stunden stabil.

Die erfindungsgemäßen Aromagranulate weisen in der Regel eine mittlere Partikelgröße im Bereich von 250 bis 1500 µm, vorzugsweise kann die Partikelgröße im Bereich von 400 bis 1000 µm eingestellt werden, je nach der Art und Größe der zu mischenden Komponenten.

Bevorzugt lassen sich die erfindungsgemäßen Aromagranulate ebenfalls durch eine Schüttdichte im Bereich von 600 bis 900 g/l kennzeichnen.

Vorzugsweise weisen erfindungsgemäße Aromagranulate eine Partikelgrößenverteilung wie folgt auf:
Rückstand auf Sieb 1400 µm: 0 %
Rückstand auf Sieb 1200 µm: < 10 %
Rückstand auf Sieb 710 µm: > 80 %
Rückstand auf Sieb 500 µm: < 10 %

Diese Partikelcharakteristika der erfindungsgemäßen Aromagranulate sowie deren bevorzugte Ausgestaltungen führen dazu, dass z. B. Entmischungen der Granulate mit z. B. Teeblättern vermindert werden und/oder ein Austreten der Granulate aus Behältnissen, wie z. B. Teebeuteln, verhindert wird. Somit können erfindungsgemäße Granulate verbessert mit zum Verzehr geeigneten Produkten gemischt werden und/oder in Behältnisse verpackt und/oder gelagert werden.

Ein wichtiges Anwendungsgebiet der erfindungsgemäßen Aromagranulate sowie deren bevorzugten Ausgestaltung ist deshalb die Aromatisierung von Tee in Teebeuteln. Gerade durch die relativ gleichmäßige sphärische Form sowie durch die Partikelcharakteristika der erfindungsgemäßen Granulate und deren bevorzugten Ausgestaltungen kann eine Entmischung der Granulate mit der Teebase und/oder ein Austreten der Granulate aus dem Teebeutel verhindert werden.

Gemäß der vorliegenden Erfindung wird die Fruchttrockensubstanz aus entsprechenden Fruchtsäften und/oder Fruchtsaftkonzentraten hergestellt, jedoch nicht aus Fruchtpulpen oder -pürees. Demnach enthält die Fruchttrockensubstanz weder Schalenstücke noch Samen oder Kerne.

Unter Frucht im Sinne der vorliegenden Erfindung sind essbare Produkte von Pflanzen, insbesondere von Bäumen und Sträuchern zu verstehen. Insbesondere sind unter dem Begriff Frucht essbare Produkte von Obst- und/oder Gemüsesorten zu verstehen.

Bevorzugte Obstsorten für die Fruchtsäfte und/oder Fruchtsaft-Konzentrate werden ausgewählt aus der Gruppe bestehend aus: Kirsche, Grapefruit, Kiwi, Apfel, Birne, Limette, Ananas, Pflaume, Sternfrucht, rote Johannisbeere, schwarze Johannisbeere, Brombeere, Aprikose, Mango, Granatapfel, Aronia, Melone, Drachenfrucht, Cranberry und Mandarine. Weiter bevorzugt sind Fruchtsäfte und/oder Fruchtsaftkonzentrate ausgewählt aus der Gruppe bestehend aus Erdbeere, Orange, Citrone, Himbeere und Pfirsich.

Bevorzugte Gemüsesorten für die Fruchtsäfte und/oder Fruchtsaftkonzentrate werden ausgewählt aus der Gruppe bestehend aus: Lauchgemüse, bevorzugt Zwiebel und/oder Lauch; Kohlgemüse, bevorzugt Wirsingkohl, Rotkohl, Kohlrübe und/oder Blumenkohl; Spargel, Tomate, Karotte und Paprika. Weiter bevorzugt sind insbesondere Tomate und Karotte.

Die in den eingesetzten Fruchtsäften und/oder Fruchtsaftkonzentraten der Obst- oder Gemüsesorte vorhandenen Fruchtsäuren gehen nicht in die Berechnung des Bestandteiles der festen verzehrbaren Säuren der Trägermatrix bb) ein.

Im Sinne der vorliegenden Erfindung sind die verzehrbaren Säuren bei 20°C fest und können im Lebensmittelbereich eingesetzt werden. Vorzugsweise handelt es sich bei den verzehrbaren Säuren um mehrbasige Säuren. Bevorzugte Säuren werden ausgewählt aus der Gruppe bestehend aus Citronensäure, Weinsäure, Phosphorsäure, Maleinsäure, Adipinsäure, Bernsteinsäure, Äpfelsäure, Fumarsäure, Ascorbinsäure (Vitamin C) sowie Mischungen von zwei oder mehreren dieser Säuren. Besonders bevorzugt sind Citronensäure und Mischungen von Citronensäure und Ascorbinsäure.

Durch den (hohen) Säureanteil kommt es bei der Herstellung der erfindungsgemäßen Aromagranulate sowie bei der anschließenden Lagerung nicht zu unerwünschten Verfärbungen, d. h. die erfindungsgemäßen Aromagranulate sind farbstabil. Somit kann die Originalfarbe der Frucht im Aromagranulat erhalten bleiben. In der Regel ist der pH-Wert des Sprühansatzes sauer und liegt bevorzugt zwischen 2,5 bis 6,9, weiter bevorzugt zwischen 4,0 und 5,0.

Eine oder mehrere der Säuren, erfindungsgemäß bevorzugt Citronensäure, kann teilweise, bevorzugt im Bereich von 10 bis 50 Gew.-% bezogen auf den Gesamtanteil der verzehrbaren Säuren der Trägermatrix bb), durch Ascorbinsäure ersetzt werden. Dies kann zudem einen gesundheitsfördernden Effekt beim Konsumenten bewirken.

Die Mengenverhältnisse von a. Magnesiumhydroxid zu b. dem Gesamtanteil an festen verzehrbaren Säuren liegt für bevorzugte erfindungsgemäße Aromagranulate in der Regel im Bereich von 3:2 bis 2:3, bevorzugt im Bereich von 1,2:1 bis 1:1,2, weiter bevorzugt bei 1:1.

Für das bevorzugte Mengenverhältnis Magnesiumhydroxid:Säure 1:1 ergeben sich folgende bevorzugte Bereiche für die mol-Verhältnisse von Magnesiumhydroxid:Säure, nämlich 1,9 bis 3,5:1, weiter bevorzugt 1,99 bis 3,30:1 und besonders bevorzugt 2,3 bis 3,3:1.

Insbesondere ergeben sich für Citronensäure, Ascorbinsäure, Äpfelsäure, Weinsäure, Bernsteinsäure sowie Fumarsäure bei einem Mengenverhältnis von 1:1 von Magnesium zu Säure folgende mol-Verhältnisse von Magnesium:Säure:

| | |
|---|---|
| Citronensäure: | 3,30:1 |
| Ascorbinsäure (Vitamin C): | 3,02:1 |
| Äpfelsäure: | 2,30:1 |
| Weinsäure: | 2,57:1 |
| Bersteinsäure: | 2,02:1 |
| Fumarsäure: | 1,99:1 |

Bevorzugt werden Citronensäure, Ascorbinsäure und/oder Äpfelsäure als verzehrbare Säure der Trägermatrix bb) in den oben dargestellten mol-Verhältnissen verwendet. Hierbei kann ebenfalls ein Anteil an Citronensäure, bevorzugt im Bereich von 10 bis 50 Gew.% bezogen auf den Gesamtanteil der verzehrbaren Säuren der Trägermatrix bb), durch Ascorbinsäure ersetzt werden.

Bezogen auf das Gesamtgewicht der Aromagranulate umfassen erfindungsgemäße Aromagranulate insgesamt weniger als 6 Gew.-%, bevorzugt weniger als 3 Gew.-% ein oder mehrerer Trägerstoffe ausgewählt aus der Gruppe bestehend aus chemisch oder physikalisch modifizierten Stärken, modifizierten Zellulosen, Gummi Arabicum, Ghatti-Gummi, Traganth, Karaya, Carrageenan, Guarkernmehl, Johannisbrotkernmehl, Alginaten, Inulin, Xanthan Gum, Dextrinen und Maltodextrinen. Vorzugsweise sind erfindungsgemäße Aromapartikel allerdings frei von den genannten zusätzlichen Trägerstoffen.

Für das erfindungsgemäße Verfahren können im Sprühansatz (Lösung, Suspension und Emulsion in Verfahrensschritt A)) gegebenenfalls ein oder mehrere Lösungsmittel als Bestandteil a) neben den Fruchtsäften und/oder Fruchtkonzentraten als Bestandteil bb) verwendet werden. Bevorzugt werden diese ausgewählt aus der Gruppe bestehend aus Wasser, Ethanol, Methanol, Propylenglycol, Isopropanol und Aceton.

Der Wassergehalt liegt in erfindungsgemäßen Aromagranulaten in der Regel bei kleiner 7 Gew.-%, vorzugsweise bei kleiner 3 Gew.-%.

Diese unterschiedlichen Mengen an Rest-Wasser in den erfindungsgemäßen Aromagranulaten sowie deren bevorzugten Ausgestaltungen ergeben sich aus der Viskosität des Sprühansatzes, also der Lösung, Emulsion oder Suspension des Verfahrensschrittes A), die zur Zerstäubung im Wirbelschichtverfahren geeignet sein muss. Die Viskosität ist abhängig von der Art der Zerstäubung und liegt in der Regel im Bereich von 10 bis 1000 mPas, bevorzugt von 75 bis 500 mPas, besonders bevorzugt im Bereich von 150 bis 300 mPas [Letzteres entspricht einem Anteil an Trockensubstanz (erfindungsgemäße Fruchttrockensubstanz sowie Trägermaterialien) von ca. 50 Gew.-% bezogen auf den nassen Sprühansatz], jeweils gemessen mit einem Rotationsviskometer bei 20°C unter einer Schergeschwindigkeit von 2000^{s-1}. Ist eine Beheizung des Ansatzes zum Trockenen möglich, kann die Viskosität bei 20°C auch höher als angegeben liegen.

Erfindungsgemäße Aromagranulate sowie deren bevorzugte Ausgestaltungen mit im Wesentlichen kugelförmiger Geometrie und festem Kugelkörper können erfindungsgemäß durch ein Wirbelschichtverfahren, vorzugsweise mittels Wirbelschichtsprühgranulation hergestellt werden. Besonders bevorzugt im Rahmen der vorliegenden Erfindung ist eine Wirbelschichtsprühgranulation mit interner Keimbildung, wie sie beispielsweise in WO 00/36931 oder US 4,946,654 beschrieben wird.

Das erfindungsgemäße Verfahren kann diskontinuierlich und kontinuierlich ausgeführt werden. Vorzugsweise wird das erfindungsgemäße Verfahren kontinuierlich ausgeführt. Ein kontinuierliches Verfahren ist besser für eine industrielle Produktion geeignet, und weist kurze Verweilzeiten auf. Bei gleichem Materialdurchsatz ist der Bettinhalt bei den kontinuierlichen Verfahren der Wirbelschichtsprühgranulation niedriger als bei den diskontinuierlichen Verfahren. Statt die Gesamtmenge aller Granulatkeime gleichzeitig aufwachsen zu lassen, wird bei der kontinuierlichen Wirbelschichtsprühgranulation nur eine kleine Menge der Granulatkeime besprüht und nach Erreichen der gewünschten Korngröße sofort über einen Sichter ausgetragen.

Ein besonders geeignetes Verfahren zur Wirbelschichtsprühgranulation sowie eine Vorrichtung zur Ausführung eines solchen Verfahrens sind beispielsweise aus US 4,946,654 bekannt. Eine solche Vorrichtung besteht in der Regel aus einem Wirbelschichtgranulattor,
- der eine oder mehrere Einrichtungen zur Verdüsung des in einer sprühfähigen Form zugeführten Produktes enthält,
- der ferner ein oder mehrere Zurückführungen von den aus dem Wirbelbett entweichenden Feingutanteilen geeignete Systeme enthält,
   und/oder
- an dessen Anströmboden unmittelbar ein oder mehrere Gegenstrom-Schwerkraft-Sichter angbracht sind.

Erfindungsgemäße Aromagranulate sowie deren bevorzugte Ausgestaltungen mit enger Partikelgrößenverteilung lassen sich bevorzugt durch ein Wirbelschichtverfahren, vorzugsweise Wirbelschichtsprühgranulation, in der Weise herstellen, dass
a) die zu granulierende Lösung, Suspension oder Emulsion in flüssiger Form in ein Wirbelbett eingesprüht wird,
b) die mit dem Abgas aus dem Wirbelbett entweichenden Feingutanteile abgeschieden werden und als Keime für die Granulatbildung in das Wirbelbett zurückgeführt werden,
c) allein durch Einstellung des Sichtgasstromes der Granulationsprozess im Wirbelbett so beeinflusst wird, dass Aromagranulate in der durch den Sichtgasstrom vorgegebenen Größe entstehen,
d) das fertige Granulat allein über einen oder mehrere in den Anstromboden der Wirbelbettapparatur eingesetzt(en) Gegenstrom-Schwerkraft-Sichter entnommen werden,
   und/oder
e) gegebenenfalls die so erhaltenen Granulate einer thermischen Nachbehandlung unterworfen werden.

Das oder mehrere der Magnesiumsalze oder Magnesiumhydroxid in Kombination mit den oder mehreren der verzehrbaren Säuren können vorzugsweise als Pulver in die Sprühmischung eingebracht werden.

Das erfindungsgemäße Wirbelschichtverfahren, vorzugsweise Wirbelschichtsprühgranulationsverfahren, zur Herstellung von erfindungsgemäßen Granulaten sowie deren bevorzugten Ausgestaltungen kann bevorzugt so durchgeführt werden, dass durch die Sichtgaszufuhr der Granulatbildungsprozess, also der Wechsel zwischen Granulatwachstum und Keimbildung, selbsttätig auf eine vorgegebene Größe der ausgetragenen erfindungsgemäßen Granulate eingestellt wird. Hierbei kann über den sichtenden Austrag die Größe der Granulate eingestellt werden. Eine solche bevorzugte Ausführungsform des erfindungsgemäßen Verfahrens ist beispielsweise in EP 0 332 031 und EP 0 332 929 beschrieben.

Grundsätzlich lässt sich das erfindungsgemäße Wirbelschichtverfahren aber auch mittels Standardgranulatoren in kontinuierlicher oder batchweise durchführen.

Die Sichtung kann ebenfalls separat und/oder nachgeschaltet mit Sieben oder anderen Klassierern erfolgen.

Keimmaterial, das benötigt wird, um Granulate im Wirbelbett aufzubauen, kann in der Regel durch Mahlung hergestellt werden oder, wie bereits oben beschrieben, als Feingutanteile im Abgas aus dem Wirbelbett abgeschieden werden und für die Granulatbildung in das Wirbelbett zurückgeführt werden.

In der Regel übersteigt die Gaseintrittstemperatur nicht 160 °C und liegt bevorzugt im Bereich von 40 bis 140 °C und weiter bevorzugt im Bereich von 80 bis 120 °C.

Die Gasaustrittstemperatur übersteigt im erfindungsgemäßen Wirbelschichtverfahren nicht 85 °C und liegt bevorzugt im Bereich von 40 bis 80 °C und weiter bevorzugt im Bereich von 65 bis 75 °C.

Ein zum Verzehr geeignetes Produkt, bevorzugt Nahrungsmittel und/oder Genussmittel, ist ein Produkt, das dazu bestimmt ist, in die menschliche Mundhöhle eingebracht zu werden, dort eine bestimmte Zeit zu verbleiben und anschließend entweder geschluckt, d. h. verzehrt (z. B. Lebensmittel) oder wieder aus der Mundhöhle entfernt zu werden (z. B. Kaugummis). Hierzu zählen auch alle Stoffe oder Erzeugnisse, die dazu bestimmt sind, in verarbeitetem, teilweise verarbeitetem oder unverarbeitetem Zustand von Menschen aufgenommen zu werden. Hierzu zählen alle Stoffe, die dem Lebensmittel bei seiner Herstellung, Verarbeitung oder Bearbeitung zugesetzt werden.

Kaugummis bestehen im Allgemeinen aus einer Kaugummibase, d. h. einer beim Kauen plastisch werdenden Kaumasse, aus Zuckern verschiedener Arten, Zuckeraustauschstoffen, Süßstoffen, Zuckeralkoholen, Feuchthaltemitteln, Verdickern, Emulgatoren, Aromen und/oder Stabilisatoren.

Bevorzugte, zum Verzehr geeignete Produkte werden ausgewählt aus der Gruppe bestehend aus Backwaren (Kekse, Kuchen, Muffins, Waffeln, Backmischungen), Zuckerwaren (Hartkaramellen, Weichkaramellen, Kaubonbons, Komprimate), Milchprodukte (Joghurts, Puddings, Eiscreme), Schokoladenwaren (weiße, helle oder dunkle Schokolade, Schokoladenriegel), Fettmassen (Backwarenfüllungen wie z. B. Keksfüllungen, Schokoladenfettfüllungen, Riegelfettfüllungen), Kaugummis (zuckerfrei, zuckerhaltig), Cerealien (Haferflocken, Cornflakes), Müslimischungen (klassisches Schüttmüsli, Studentenfutter), Müsliriegeln, Snacks und Snackmischungen (süßes Popcorn, Mischung von Fruchtstückchen, Nüsse, Nussriegel, Nuss-Frucht-Riegel), Pulverprodukte (Instant Desserts in Pulverform wie Puddingpulver oder Götterspeise) und Aufstreumischungen (Toppings).

Der Anteil an erfindungsgemäßen Aromagranulaten sowie deren bevorzugten Ausgestaltungen in einem erfindungsgemäßen (zum Verzehr geeigneten) Produkt liegt, je nach Produkttyp, regelmäßig im Bereich von 0,1 bis 20 Gew.-%, bevorzugt im Bereich von 0,25 bis 10 Gew.-%, jeweils bezogen auf das Gesamtgewicht des Produktes.

Weitere übliche Grund-, Hilfs- und Zusatzstoffe für Nahrungs- oder Genussmittel können in der Regel in Mengen von 0,00001 bis 99,9 Gew.-%, vorzugsweise 10 bis 80 Gew.-% bezogen auf das Gesamtgewicht der Zubereitung enthalten sein. Ferner können die Zubereitungen Wasser in einer Menge bis zu 99,9 Gew.-%, vorzugsweise 5 bis 80 Gew.-% bezogen auf das Gesamtgewicht der Zubereitung aufweisen.

Die zum Verzehr geeigneten Produkte im Sinne der Erfindung können auch als Halbfertigware zur Herstellung weiterer der Ernährung oder dem Genuss dienenden Zubereitungen verwendet werden. Produkte im Sinne der Erfindung können auch in Form von Kapseln, Tabletten (nicht überzogene sowie überzogene Tabletten, z. B. magensaftresistente Überzüge, Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Der Anteil an erfindungsgemäßen Aromagranulaten in einem erfindungsgemäßen Halbfertigprodukt liegt, je nach Produkttyp, regelmäßig im Bereich von 0,1 bis 20 Gew.-%, bevorzugt im Bereich von 0,25 bis 10 Gew.-%, jeweils bezogen auf das Gesamtgewicht des Produktes.

Als weitere Bestandteile für die erfindungsgemäßen, der Ernährung oder dem Genuss dienenden Zubereitungen können weitere übliche Grund-, Hilfs- und Zusatzstoffe für Nahrungs- oder Genussmittel verwendet werden, z. B. Wasser, Gemische frischer oder prozessierter, pflanzlicher oder tierischer Grund- oder Rohstoffe, verdauliche oder nicht verdauliche Kohlenhydrate (z. B. Saccharose, Maltose, Fructose, Glucose, Dextrine, Amylose, Amylopektin, Inulin, Xylane, Cellulose), Zuckeralkohole (z. B. Sorbit, Mannitol, Xylitol), natürliche oder gehärtete Fette (z. B. Talg, Schmalz, Palmfett, Kokosfett, gehärtetes Pflanzenfett), fette Öle (z. B. Sonnenblumenöl, Erdnussöl, Maiskeimöl, Distelöl, Olivenöl, Walnussöl, Fischöl, Sojaöl, Sesamöl), Fettsäuren oder deren Salze (z. B. Kaliumstearat, Kaliumpalmitat), proteinogene oder nichtproteinogene Aminosäuren und verwandte Verbindungen (z. B. Taurin, Kreatin, Kreatinin), Peptide, native oder prozessierte Proteine (z. B. Gelantine), Enzyme (z. B. Peptidasen, Glucosidasen, Lipasen), Nucleinsäuren, Nucleotide (Inositolphosphat), geschmacksmodulierende Stoffe (z. B. Natriumglutamat, 2-Phenoxypropionsäure), Emulgatoren (z. B. Lecithine, Diacylglycerole), Stabilisatoren (z. B. Carrageenan, Alginat, Johannisbrotkernmehl, Guarkernmehl), Konservierungsstoffe (z. B. Benzoesäure, Sorbinsäure), Antioxidantien (z. B. Tocopherol, Ascorbinsäure), Chelatoren (z. B. Citronensäure), organische oder anorganische Säuerungsmittel (z. B. Äpfelsäure, Essigsäure, Citronensäure, Weinsäure, Phosphorsäure), Bitterstoffe (z. B. Chinin, Coffein, Limonin), Süßstoffe (z. B. Saccharin, Cyclamat, Aspartam, Neotam, Neohesperidindihydrochalkon), mineralische Salze (z. B. Natriumchlorid, Kaliumchlorid, Magnesiumchlorid, Natriumphosphate), die enzymatische Bräunung verhindernden Stoffe (z. B. Sulfit, Ascorbinsäure), etherische Öle, Pflanzenextrakte, natürliche oder synthetische Farbstoffe oder Farbpigmente (z. B. Carotinoide, Flavonoide, Anthocyane, Chlorophyll und deren Derivate), Gewürze sowie Riechstoffe, synthetische, natürliche oder naturidentische Aroma- und Geschmacksstoffe.

Im Sinne der vorliegenden Erfindung können Halbfertigwaren zur Aromatisierung von daraus gefertigten Produkten als Fertigwaren verwendet werden.

Die nachfolgenden Beispiele erläutern die Erfindung ohne dabei die Erfindung lediglich auf die Ausführungsbeispiele zu beschränken. Sofern nichts anderes angegeben wurde, beziehen sich alle Angaben auf das Gewicht.

Aus den nachfolgenden Rezepturen A) bis C) wurden mittels Wirbelschichtsprühgranulation mit interner Keimbildung, in Anlehnung an die in WO 00/36931 oder US 4,946,654 beschriebenen Verfahren, erfindungsgemäße Aromapartikel hergestellt.

### Herstellverfahren:

In einer Granulierapparatur des in EP 163 836 dargestellten Typs (mit den folgenden Merkmalen: Durchmesser Anströmboden: 225 mm, Sprühdüse: Zweistoffdüse; Sichtender Austrag: Zick-Zack-Sichter; Filter: interner Schlauchfilter) wird eine Mischung A), B) oder C) (siehe nachfolgend) granuliert. Die Mischung wird bei einer Temperatur von 32 °C in den Wirbelschichtgranulator gesprüht. Zur Fluidisierung des Bettinhaltes wird Stickstoff in einer Menge von 70 kg/h eingeblasen. Die Eintrittstemperatur des Fluidisiergases beträgt 140 °C. Die Temperatur des Abgases beträgt 76 °C. Als Sichtgas wird ebenfalls Stickstoff in einer Menge von 5 kg/h mit einer Temperatur von 50°C durchgeführt. Man erhält ein freifließendes Granulat mit einem mittleren Teilchendurchmesser von 0,9 mm bei einer Schüttdichte von 600 g/l bis 900 g/l. Die Granulate sind im Wesentlichen rund und weisen eine im Wesentlichen glatte Oberfläche auf. Aufgrund des konstanten Druckverlustes des Filters und des ebenfalls konstantbleibenden Bettinhaltes ist von stationären Bedingungen hinsichtlich des Granulationsprozesses auszugehen.

Die Partikelgrößenverteilung wird gemäß der vorliegenden Ausführungsbeispiele entweder mit einem Malvern-Laser-Messgerät oder mittels eines Retsch Siebturmes ermittelt.

Die Schüttdichte wird für die vorliegenden Ausführungsbeispiele mit einem 100 ml Standmesszylinder ermittelt.

Für die vorliegende Erfindung und die vorliegenden Ausführungsbeispiele wird die Sphärizität bei mindestens 20 Einzelpartikeln der erfindungemäßen Aromagranulate mit Hilfe eines Auflichtstereomikroskopes mit eingebauter Skalierung gemessen.

### A) Rezeptur für Himbeer-Aromagranulate

| | |
|---|---|
| Himbeersaftkonzentrat, klar, 65 °Brix | 1200 g |
| Magnesiumhydroxid | 100 g |
| Citronensäure | 100 g |
| | |
| Wasser | 600 g |
| Schüttdichte | 890 g/l |
| Restfeuchte | 2,4 % |
| Frucht - Trockensubstanz | 79,2 % |

Hierbei bezeichnet °Brix ("Grad Brix") den Trockensubstanzgehalt des verwendeten Saftkonzentrates

### B) Rezeptur für Orange-Aromagranulate

| | |
|---|---|
| Orangensaftkonzentrat, 65 °Brix | 1200 g |
| Magnesiumhydroxid | 100 g |
| Citronensäure | 100 g |
| Wasser | 350 g |
| | |
| Schüttdichte | 695 g/l |
| Restfeuchte | 1 ,26 % |
| Frucht - Trockensubstanz | 79,2 % |

### C) Rezeptur für Kirsch-Aromagranulate

| | |
|---|---|
| Kirschsaft (Sauer) - Konzentrat, 56 °Brix | 3800 g |
| Magnesiumhydroxid | 353 g |
| Citronensäure | 353 g |
| | |
| Schüttdichte | 710 g/l |
| Restfeuchte | 3,3 % |
| Frucht - Trockensubstanz | 71,3 % |

**Für die Partikelverteilung aller Produkte gilt:**
Rückstand auf Sieb 1400 µm: 0 %
Rückstand auf Sieb 1200 µm: < 10 %
Rückstand auf Sieb 710 µm: > 80 %
Rückstand auf Sieb 500 µm: < 10 %

### Beispiel F1: Kaubonbon mit erfindungsgemäßen Aromagranulaten

| | | |
|---|---|---|
| Wasser | | 7,7 % |
| Zucker | Raffinade C4 | 41,0 % |
| Glucose Sirup | Dextrose 40 | 37,3 % |
| gehärtetes Pflanzenfett | Schmelzpunkt 32-36 °C | 6,5 % |
| Lecithin | Emulgator (Sojalecithin) | 0,3 % |
| Gelantine | Schweinegelantine | 0,8 % |
| Fondant | Typ-S30 | 4,8 % |
| Aromagranulate aus Beispiel A) | | 1,6 % |

### Beispiel F2: Komprimat mit erfindungsgemäßen Aromagranulaten

| | | |
|---|---|---|
| Dextrose | | 97,1 % |
| Magnesium Stearat | Gleitmittel | 0,9 % |
| Citronensäure | | 0,2 % |
| Aromagranulate aus Beispiel A) | | 1,8 % |

### Beispiel F3: Fruchtiger Müsliriegel mit erfindungsgemäßen Aromagranulaten

| | | |
|---|---|---|
| Saccharose | Zucker | 16,0 % |
| Glucose Sirup | | 14,0 % |
| Sorbit P 300 | Feuchthaltemittel | 5,0 % |
| Pflanzenfett | | 5,0 % |
| Wasser | | 3,0 % |
| Haferflocken | | 13,3 % |
| Haferflakes | Hafer Extrudate | 10,0 % |
| Cornflakes | | 5,5 % |
| Rice Crispies | Reis Extrudate | 20,0 % |
| Konrinthen | | 5,0 % |
| Aromagranulate aus Beispiel C) | | 1,0 % |
| Aromagranulate aus Beispiel B) | | 2,0 % |
| Zitronensäure Puder | | 0,2 % |

### Beispiel F4: Tee mit erfindungsgemäßen Aromagranulaten

800 g Rotbusch-Tee (Rooibos-Tee) bzw. Schwarztee-Fannings werden in einen 5 Liter Lödige Pflugscharmischer vorgelegt. Die Teeblätter werden 10 Sekunden lang vorgemischt und fluidisiert. Ohne Unterbrechung des Mischprozesses werden mittels einer Ein- oder Zweistoffdüse 5 g eines feinen Neutralöl-Nebels (MCT-Ölaerosol) auf die fluidisierten Teeblätter gesprüht. Dies dauert etwa 60 Sekunden. Ohne Unterbrechung des Mischprozesses werden anschließend 33 g des oben genannten Orange-Aromagranulate (Beispiel B)) zu der Mischung gegeben, optional unter Zugabe von 5 g Neutralöl (MCT-Öl / medium-chain triglyceride - Öl), und die gesamte Mischung weitere 60 Sekunden lang gemischt.

### Beispiel F5: Zuckerfreie Kaugummis mit erfindungsgemäßen Aromagranulaten

| Teil | Inhaltsstoff | Gew.-% |
|---|---|---|
| A | Kaugummibase, Company "Jagum T" | 30,00 |
| B | Sorbit, pulverisiert | 39,00 |
| | Isomalt^{®} (Palatinit GmbH) | 9,50 |
| | Xylit | 2,00 |
| | Mannit | 3,00 |
| | Aspartam^{®} | 0,10 |
| | Acesulfam^{®} K | 0,10 |
| | Emulgum^{®} (Colloides Naturels, Inc.) | 0,30 |
| C | Sorbitol, 70% | 13,50 |
| | Glycerin | 1,00 |
| D | Menthol-Eucalyptus-Aroma | 1,0 |
| | Aromagranulate aus Beispiel B) | 0,5 |

### Beispiel F6: Kaugummis mit erfindungsgemäßen Aromagranulaten

Die Kaugummibase K2 bestand aus folgenden Zutaten: 28,5 Gew.-% Terpenharz, 33,9 Gew.-% Polyvinylacetat (MW = 14,000), 16,25 Gew.-% hydriertes Pflanzenöl, 5,5 Gew.-% Mono- und Diglyceride, 0,5 Gew.-% Polyisobuten (MW 75,000), 2,0 Gew.-% Butyl Rubber (Isobuten-Isopren-Copolymer), 4,6 Gew.-% amorphes Siliziumdioxid (Wassergehalt ca. 2,5 %), 0,05 Gew.-% Antioxidans tert.-Butylhydroxytuluol (BHT), 0,2 Gew.-% Lecithin, und 8,5 Gew.-% Calciumcarbonat. Die Herstellung der Kaugummibase K2 und der Kaugummis erfolgte analog zu US 6,986,907.

| | I (Gew.-%) | II (Gew.-%) | III (Gew.-%) |
|---|---|---|---|
| Kaugummibase K2 | 25,30 | 27,50 | 26,30 |
| Sorbitol | 61,48 | 59,68 | 61,80 |
| Glycerin | 2,40 | 2,40 | 2,40 |
| Lecithin | 7,00 | 7,00 | 7,00 |
| Aspartam | 0,14 | 0,14 | 0,14 |
| verkapseltes Aspartam | 0,68 | 0,68 | 0,68 |
| Menthol, sprühgetrocknet | 0,50 | - | 0,50 |
| Kirscharoma, sprühgetrocknet | - | 1,20 | - |
| Aromagranulate aus Beispiel B) | 1,50 | 1,40 | - |
| Aromagranulate aus Beispiel C) | 1,00 | - | 1,18 |

## Patentansprüche

1. Wirbelschichtverfahren zur Herstellung von Aromagranulaten,
**dadurch gekennzeichnet, dass** das Verfahren folgende Schritte umfasst oder daraus besteht:
A) Bereitstellung einer Lösung, Emulsion oder Suspension umfassend oder bestehend aus
a) gegebenenfalls einem oder mehreren Lösungsmitteln
und
b) einer Mischung umfassend oder bestehend aus
aa) Fruchtsaft und/oder Fruchtkonzentrat
und
bb) einer Trägermatrix umfassend oder bestehend aus
i) Magnesium-Salz einer oder mehrerer fester verzehrbarer Säuren
oder
ii) einer Mischung aus
a. Magnesiumhydroxid und
b. einer oder mehrer fester verzehrbarer Säuren,
B) Sprühen der Lösung, Emulsion oder Suspension aus A) in einen Wirbelschichtgranulator und
C) Abtrennen der entstandenen Aromagranulate, wobei die Aromagranulate eine im Wesentlichen kugelförmige Geometrie mit festem Kugelkörper aufweisen, umfassend oder bestehend aus folgenden Bestandteilen, jeweils bezogen auf das Gesamtgewicht der entstandenen Aromagranulate:
aa) 60 bis 90 Gew.-% Fruchttrockensubstanz
und
bb) einer Trägermatrix umfassend oder bestehend aus
i) 10 bis 40 Gew.-% Magnesium-Salz einer oder mehrerer fester verzehrbarer Säuren
oder
ii) einer Mischung aus
a. 5 bis 20 Gew-% Magnesiumhydroxid und
b. 5 bis 20 Gew.-% einer oder mehrer fester verzehrbarer Säuren.

2. Wirbelschichtverfahren gemäß Anspruch 1, **dadurch gekennzeichnet, dass**
die Gas-Eintrittstemperatur im Bereich von 40 bis 140 °C und
die Gas-Austrittstemperatur im Bereich von 40 bis 80 °C liegt.

3. Wirbelschichtverfahren gemäß Anspruch 1 oder 2, **dadurch gekennzeichnet, dass** die Mengenverhältnisse von a. Magnesiumhydroxid zu b. dem Gesamtanteil an festen verzehrbaren Säuren im Bereich von 3:2 bis 2:3, bevorzugt von 1,2:1 bis 1:1,2 und weiter bevorzugt bei 1:1 liegen.

4. Wirbelschichtverfahren gemäß Anspruch 3, **dadurch gekennzeichnet, dass** das Mengenverhältnis von a. Magnesiumhydroxid zu b. dem Gesamtanteil an festen verzehrbaren Säuren bei 1:1 liegen und die mol-Verhältnisse im Bereich von 1,9 bis 3,5:1, bevorzugt im Bereich 1,99 bis 3,3:1 und weiter bevorzugt im Bereich von 2,3 bis 3,3:1 liegen.

5. Aromagranulate herstellbar gemäß einem der Ansprüche 1 bis 4, **dadurch gekennzeichnet, dass** die Aromagranulate eine im Wesentlichen kugelförmige Geometrie mit festem Kugelkörper aufweisen, umfassend oder bestehend aus folgenden Bestandteilen, jeweils bezogen auf das Gesamtgewicht der entstandenen Aromagranulate:
aa) 60 bis 90 Gew.-% Fruchttrockensubstanz
und
bb) einer Trägermatrix umfassend oder bestehend aus
i) 10 bis 40 Gew.-% Magnesium-Salz einer oder mehrerer fester verzehrbarer Säuren
oder
ii) einer Mischung aus
a. 5 bis 20 Gew-% Magnesiumhydroxid und
b. 5 bis 20 Gew.-% einer oder mehrer fester verzehrbarer Säuren.

6. Aromagranulate gemäß Anspruch 5, **dadurch gekennzeichnet, dass**
die Aromagranulate folgende Bestandteile umfassen oder daraus bestehen:
aa) 70 bis 90 Gew.-% Fruchttrockensubstanz
und
bb) einer Trägermatrix umfassend oder bestehend aus
i) 10 bis 30 Gew.-% Magnesium-Salz einer oder mehrerer fester verzehrbarer Säuren
oder
ii) einer Mischung aus
a. 5 bis 15 Gew.-% Magnesiumhydroxid und
b. 5 bis 15 Gew.-% einer oder mehrer fester verzehrbarer Säuren.

7. Aromagranulate gemäß Anspruch 5 oder 6, **dadurch gekennzeichnet, dass** die Mengenverhältnisse von a. Magnesiumhydroxid zu b. dem Gesamtanteil an festen verzehrbaren Säuren im Bereich von 3:2 bis 2:3, bevorzugt von 1,2:1 bis 1:1,2 und weiter bevorzugt bei 1:1 liegen.

8. Aromagranulate gemäß Anspruch 7, **dadurch gekennzeichnet, dass** das Mengenverhältnis von a. Magnesiumhydroxid zu b. dem Gesamtanteil an festen verzehrbaren Säuren bei 1:1 liegen und die mol-Verhältnisse im Bereich von 1,9 bis 3,5:1, bevorzugt im Bereich 1,99 bis 3,3:1 und weiter bevorzugt im Bereich von 2,3 bis 3,3:1 liegen.

9. Aromagranulate gemäß einem der Ansprüche 5 bis 8, **dadurch gekennzeichnet, dass**
die Aromagranulate eine mittlere Partikelgröße im Bereich von 400 bis 1000 µm aufweisen.

10. Aromagranulate gemäß einem der Ansprüche 5 bis 9, **dadurch gekennzeichnet, dass**
die Aromagranulate eine Schüttdichte im Bereich von 600 bis 900 g/l aufweisen.

11. Aromagranulate gemäß einem der Ansprüche 5 bis 10, **dadurch gekennzeichnet, dass**
die Aromagranulate eine Partikelgrößenverteilung wie folgt aufweisen:
Rückstand auf Sieb 1400 µm: 0%
Rückstand auf Sieb 1200 µm: < 10 %
Rückstand auf Sieb 710 µm: > 80 %
Rückstand auf Sieb 500 µm: < 10 %.

12. Zum Verzehr geeignetes Produkt umfassend Aromagranulate gemäß einem der Ansprüche 5 bis 11.

13. Produkt gemäß Anspruch 12, **dadurch gekennzeichnet, dass** das Produkt ausgewählt wird aus der Gruppe bestehend aus Nahrungsmitteln, Genussmitteln und Halbfertigprodukten.

14. Verwendung von Aromagranulaten gemäß einem der Ansprüche 5 bis 11 in Nahrungsmitteln, Genussmitteln und Halbfertigprodukten.

15. Verwendung von Aromagranulaten gemäß einem der Ansprüche 5 bis 11 zur Herstellung von Nahrungsmitteln, Genussmitteln und Halbfertigprodukten.
